# EUROPEAN PATENT APPLICATION

(11) **EP 0 967 141 A1**
(43) Date of publication of application: **29.12.1999**
(21) Application number: 99111490.1
(22) Date of filing: 14.06.1999
(51) Int. Cl.: B62J 15/02

(54) **Device for securing a bicycle mudguard**

(30) Priority: 24.06.1998 IT VR980039 U
(71) Applicant: San Giorgio s.n.c. di De Poli Livia & C., 35014 Fontaniva (Padova) (IT)
(72) Inventor: De Poli, Livia, 35014 Fontaniva (Padova) (IT)
(74) Representative: Petraz, Gilberto

(57) **Abstract**

Blocking device (10) of a bicycle mudguard (16) that comprises a support element (11) forming a groove (15) which is suitable for receiving said mudguard (16), and also at least one hole positioned longitudinally with respect to said blocking device (10) and suitable for hosting at least one support stick (17) of the mudguard (16), and at least one protrusion (20, 22, 23, 25, 26) cooperating with the support element (11) and with the mudguard. Said at least one protrusion (20, 22, 23, 25, 26) is made of a synthetic material, points towards the inside of the groove (15) and is suitable for going through the thickness of the mudguard (16) positioned along the groove (15). The mudguard (16) is provided with a suitable hole that makes it possible the at least one protrusion (20, 22, 23, 25, 26) to go through it.

## Description

### FIELD OF THE INVENTION

The present invention relates to a blocking device for bicycle mudguards thanks to which it is possible to accomplish a stable and durable fixing of said mudguard to its supporting sticks.

The present invention finds a particularly suitable application in the bicycle and bicycle component manufacturing fields.

### STATE OF THE ART

There are found to be known in the art several devices thanks to which it is possible to fix a bicycle mudguard to its respective supporting sticks which are used in order for them to give support to said mudguard, said sticks being generally integral with the fork of the bicycle frame or directly joined to the wheel hub coupled to said mudguard.

Document GB-A-2,278,323 for example discloses a blocking system consisting of a support element, made of either metal or plastics, provided for each stick or for a couple of parallel sticks, said support element being fixed to the mudguard by dint of rivets or other mechanical means that are positioned in correspondence with the outside edge of said mudguard.

According to that cited document of the prior art, the support element results to be made of two distinct parts that abut onto the surface of the mudguard and are suitably shaped so as to follow its profile.

Said supporting element results to be advantageously made of a plastic material so as to be suitable to the introduction of a self threading screw that avoids the need to made a threaded hole into the supporting element.

Said couple of elements is therefore fixed to the supporting sticks by traditional nut and screw systems.

However such a blocking system brings about the need to use rivets or other mechanical means which are capable of fixing the mudguard to its supporting elements, thing which complicates the general fixing procedure of the mudguard, furthermore increasing the global costs for its production.

According to a further form of embodiment disclosed in the above cited document GB-A-2,278,323, one of the parts making up the so called supporting element is also equipped with a small protrusion that is suitable for being inserted into a conjugated cavity which is suitably provided within the thickness of the mudguard.

In so doing then, the blocking device according to the form of embodiment described does not entice the need to employ any rivet or any other mechanical means that are suitable for securing the mudguard to said support element because such a mudguard is found to be inserted between the two parts making up said support element and it is kept in the correct position by the presence of the protrusion that interacts with a corresponding cavity made within the thickness of the mudguard.

Nevertheless that typology of blocking device has some disadvantages that make it little secure and little convenient to use.

In fact it is sufficient for the mudguard to be subjected to a collision, even a slight one, particularly along a direction that is normal to the mudguard itself, and be ejected from its position and detached from the support element.

A further securing device suitable for being applied to a mudguard is that disclosed in detail in patent application number VI95000076 in the name of the Applicant.

Such a blocking device comprises at least a plastic material supporting element provided with a suitable groove inside which the edge of the mudguard top to be fixed is placed.

Furthermore, said device is provided with a couple of holes, which are suitable for the passage of a couple of support sticks, and with a further hole that is perpendicular to the holes for the sticks and positioned in such a way that it desurfaces within said groove.

This means therefore that at the stage when the mudguard is fixed, this is kept in position by a self threading screw inserted into said further hole, the clamping of said screw involving the perforation of the mudguard itself and its fixing to the support element.

Such a clamping further involves a partial deformation of the support element which is made of a plastic material, thing that makes it possible to accomplish a permanent fixing of the sticks to said support element.

Such a securing device on the other hand needs the holes to be precisely located, therefore it entices an accurate preparation and use of the moulds, as much as the employment of mechanical fixing means, such as for example self threading screws, for which the punching of said mudguard is required.

Though a device like that guarantees a secure fixing, therefore a good final result, as a ayatem it is overall little cost effective and is further not easy to put in practice.

### DESCRIPTION OF THE INVENTION

The present invention aims at overcoming the limitations, drawbacks and disadvantages that are typical of the prior art, therefore at proposing a securing device which is capable of accomplishing a stable and durable fixing of a bicycle mudguard to its respective support stick.

This is accomplished by the device having the features described in the main claim.

Dependent claims outline particularly advantageous forms of embodiment of the present invention.

According to a first form of embodiment of the blocking device according to the present invention, this is made up of a support element which is advantageously made of plastic material, formed by two more or less symmetrical parts which are joined to each other at one end and having such a shape that their coupling gives way to a groove between the two parts where the perimetral edge of a bicycle mudguard to be fixed can be positioned.

According to the present invention, said support element can be produced using just one mould from which two distinct parts are obtained that are joined to each other at one end, just like two valves of a shell, so that these two distinct parts can clamp, matching with each other.

According to a further form of embodiment of the present invention, the support element is made of two distinct parts that in use are joined to each other by one or more mechanical coupling means, such as for example a screw as described below in this same specification.

The support element of the blocking device according to the present invention is furthermore provided with at least one hole which is suitable for the positioning of at least one support stick, fulfilling the function of sustaining a bicycle mudguard, said support stick being generally integral with the fork of the frame of said bicycle or being directly joined to the wheel hub joined to the mudguard.

Furthermore, said support element comprises at least a further hole that is transversally positioned with respect to said al least one hole of which above so that said further hole bores through the thickness of both parts that make up the support element in its area that is not made into a groove and that is suitable for the positioning and the securing of the mudguard.

Once in place, then, a suitable screw (of the self threading type or with nut, or other mechanical coupling means) is inserted into said further hole so that its clamping causes the nearing and subsequent coupling of the two parts making up the support element.

According to a form of embodiment of the present invention, one of the two parts which the support element is made of is provided with a protrusion located in correspondence with the the grooved area, particularly its inside face, said protrusion being suitable for fully passing through the thickness of the mudguard, once it has been positioned in the groove.

According to that specific form of embodiment, the mudguard further comprises a suitable hole which is capable of making it possible for said protrusion to be slid through, whereas the second part making up the support element is suitably equipped with a cavity having a shape that is complementary to that of said protrusion.

In such a way therefore, when said protrusion is inserted into the hole made in the mudguard, it is found to desurface inside said cavity, accomplishing a valid and secure blocking of the mudguard.

At the fixing stage then the parts making up the support element are found in open or separate positions, depending on whether they were obtained from the same mould or not, and the couple of support sticks is suitably introduced into the suitable holes.

Afterwards, the positioning of the mudguard inside the groove ensues, so that the protrusion which the first part of the support element is provided with goes through the hole which the mudguard is provided with and then goes to interact with the cavity which the second part of said element is provided with.

Finally, inside said further hole of which above, a screw or whatever other mechanical coupling means is positioned, the clamping of said screw involving the permanent blocking of the mudguard in the groove and a partial deformation of the support element made of the plastic material.

According to a further form of embodiment of the present invention, the protrusion of a part of the support element is shaped in such a way that it has a volume with greater encumbrance at its end, when compared with the size of the body of the protrusion itself.

Consequently, even the complementary cavity provided in the second part of said support element and suitable for receiving said protrusion is bound to be shaped so as to be capable of receiving said greater encumbering volume.

According to that form of embodiment, the particular configuration of the protrusion makes it possible to achieve a fixing of the snapping type between protrusion and cavity, this being extremely secure and guaranteeing a great holding of the mudguard when it is used.

According to a further form of embodiment of the present invention, the protrusion described above is provided at its end with a hook-shaped element, whereas the second part of the support element is provided with a hole located in a position that corresponds with said protrusion, so that it makes it possible for this to slide along it at the assembling stage and to be anchored to a suitable abutment surface that is found in the second part of said support element.

According to a variant of said further form of embodiment, the securing device according to the present invention comprises a support element made of an only part provided with a protrusion that is shaped as a hook.

In such a way therefore, once the mudguard thickness has been slid through, as specified above, said hook directly interacts with the surface of the mudguard, accomplishing therefore the desired blocking.

According to a further form of embodiment, both parts making up the support element are provided with a protrusion in correspondence with the inside area of the groove where the mudguard to be fixed finds its location.

Even in this case said mudguard is provided with a suitable hole so that said protrusions can interact with it, the blocking of the whole system being guaranteed by the subsequent clamping of a screw or of a couple of screws, or of any other mechanical coupling means inserted into one or more further holes that were described previously and are located transversally with respect to the support sticks.

According to a particularly advantageous form of embodiment of the present invention, said at least one support stick of the mudguard is equipped with a plurality of notches that are positioned transversally to said stick along its longitudinal length.

Said notches are suitable for interacting with a cooperation means which the blocking device is provided with, said means being for example represented by a nail or by a staple and fulfilling its function of engaging said notches in such a way that it makes it possible to achieve an optimal length adjustment of the support stick.

In such a way then the support stick can be adapted to different models of bicycles having different sizes, making it possible to produce a piece with a universal applicability and with remarkable savings in terms of costs and material.

According to a further form of embodiment of the present invention, said at least one protrusion is made of a peg of synthetic material which is suitable for being inserted with pressure into a first hole made in said first portion of the support element, into said hole made through the thickness of the mudguard, as well as into a second hole made in said second portion of the support element.

It appears to be clear then, according to the forms of embodiment so far described, that the blocking device according to the present invention makes it possible to obtain an optimal fixing of a bicycle mudguard to the support sticks of the mudguard itself.

Such a typology of blocking guarantees in fact a secure and stable positioning of the mudguard even in case of any collision it may accidentally incur into.

### ILLUSTRATION OF DRAWINGS

Other features and advantages of the present invention will be more evident from the reading of the following description, given by way of not limiting example, with reference to the figures in the appended tables, where:
- figure 1 shows a partially cutaway schematic view of one form of embodiment of the present invention;
- figure 2 shows a partially cutaway schematic view of a further form of embodiment of the present invention;
- figure 3 shows a partially cutaway schematic view of a further form of embodiment of the present invention; and
- figure 4 show a partially cutaway schematic view of the form of embodiment shown in figure 1.

### DETAILED DESCRIPTION OF ONE FORM OF EMBODIMENT

In the figures, reference numeral 10 indicates a blocking device for bicycle mudguards according to the present invention.

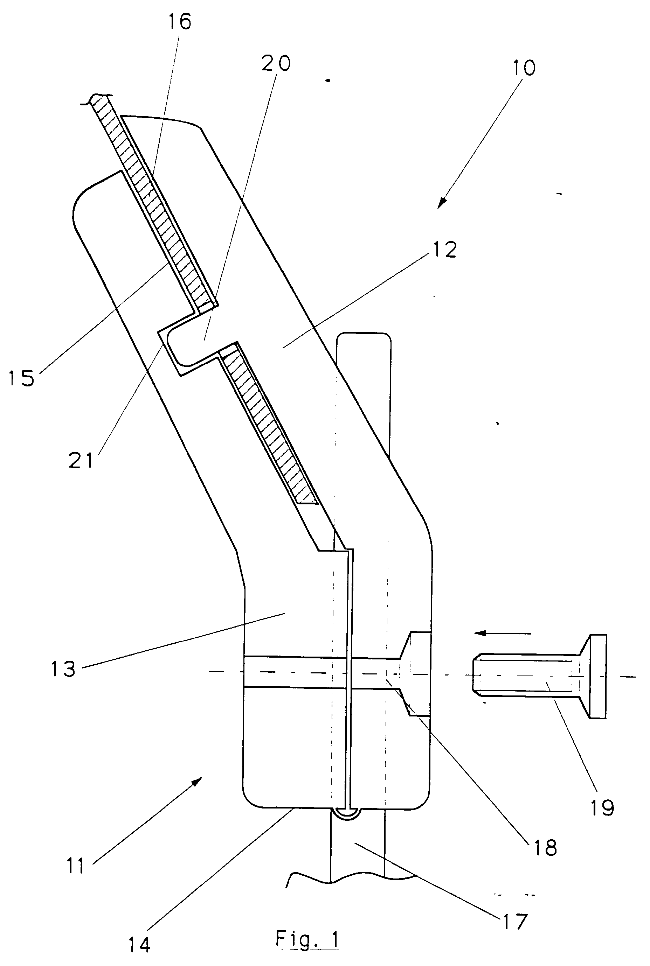

According to the form of embodiment shown in figure 1, blocking device 10 is made of a supoort element 11, advantageously made of a plastic material, formed by two distinct parts 12, 13 firmly joined to each other at their end 14 by the use of a suitable joining means, such as for example a hinge, that makes it possible for parts 12, 13 to rotate around an axis lying on a plane that is perpendicular to the plane of the sheet.

Said two distinct parts 12, 13 have such a shape that a groove 15 forms between them that is suitable for the positioning of a mudguard 16 for bicycles, once these have been coupled together.

According to a further (not shown) form of embodiment the support element is made of two distinct parts that are joined with each other, once in place by one or more mechanical coupling means, such as for example a screw.

The support element of blocking device 11 is further provided with a couple of holes (not shown) that are suitable for the positioning of a support stick 17 or else of a couple of support sticks bound to sustain mudguard 16 of which above, said support sticks 17 being generally integral with the fork of the frame of said bicycle or directly with the wheel hub coupled with the mudguard.

Support element 11 further comprises a further hole 18 made transversally to the above cited couple of holes so that said further hole 18 bores through the thickness of both parts 12, 13 making up the support element 11 in its area where groove 15 is not present.

When in place, a screw 19 is inserted into said further hole 18 so that its clamping gives way to the approaching and subsequent coupling of two parts 12, 13 making up support element 11.

According to the form of embodiment shown in figure 1, along groove 15 and on its inside face, part 12 of support element 11 is provided with a protrusion 20 that is suitable for crossing the thickness of mudguard 16 once this is positioned onto groove 15.

According to that form of embodiment, groove 16 further comprises a hole that is suitable for making it possible for the passage of said protrusion 20 to occur, whereas other side 13 of support element 11 is provided with a cavity 21 having a shape that is complementary to that of protrusion 20.

In such a way therefore said protrusion 20 is inserted into the hole made through mudguard 16, it desurfaces inside said cavity 21 so achieving a valid and secure blocking of the mudguard.

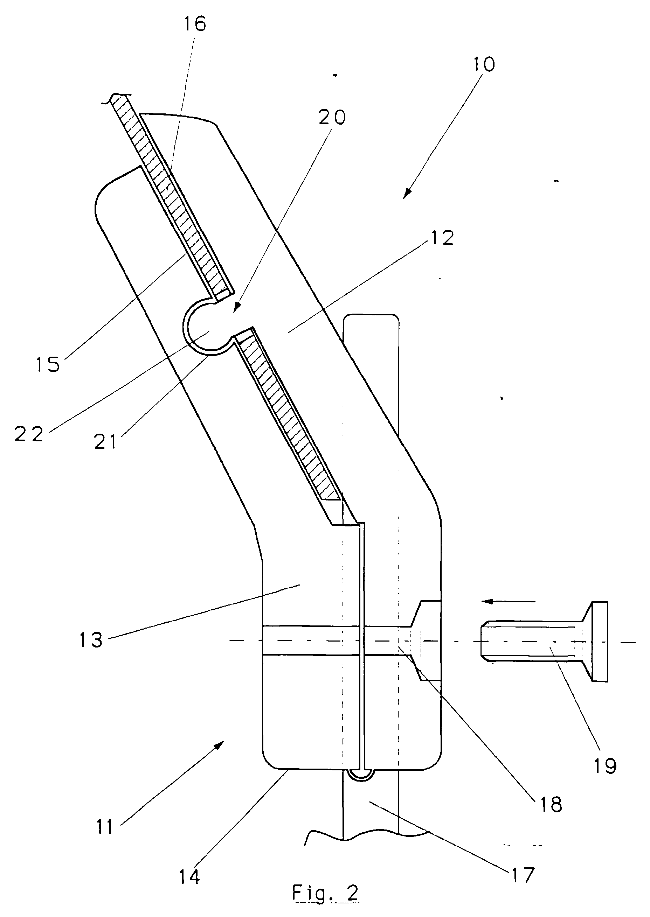

According to a further form of embodiment shown in figure 2, protrusion 20 that is integral with one side 12 of support element 11 is shaped in such a way as to have an area 22 at its end with a greater encumbrance with respect to the size of the body of the protrusion itself.

Consequently, cavity 21 that is complementary and provided on the other side 13 of said support element 11, and made suitable to host protrusion 20, is shaped in such a way to host said volume 22 having greater encumbrance.

In such a way then a protrusion-cavity fixing is achieved of the snapping type that results to be particularly secure, guaranteeing a high holding of the mudguard when it is used.

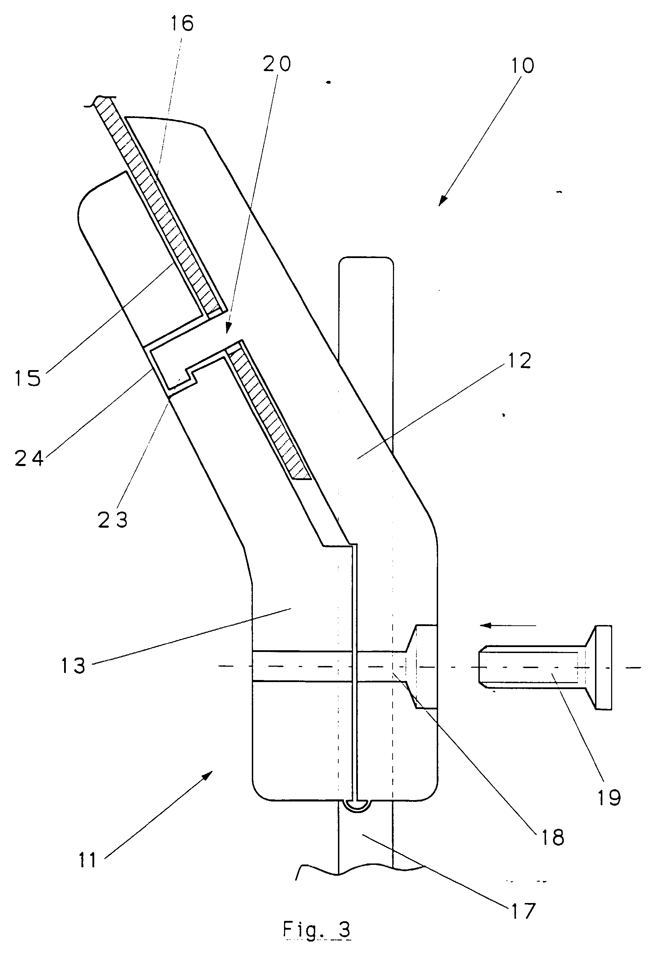

According to a further form of embodiment shown in figure 3, a first part 12 of a support element 11 has a protrusion 20 whose end 23 is hook-shaped, whereas a second part 13 of support element 11 is provided with a corresponding cavity 24 shaped so as to be suitable for hosting said hook 23 and accomplishing the blocking of mudguard 16.

According to a variant (not shown) of said further form of embodiment, blocking device 10 comprises a support element 11 made of just one part 12 provided with a protrusion 20 shaped as a hook 23.

Therefore, in such a way, once the thickness of mudguard 16 has been gone through, said hook 23 directly interacts with the mudguard surface accomplishing the desired blocking.

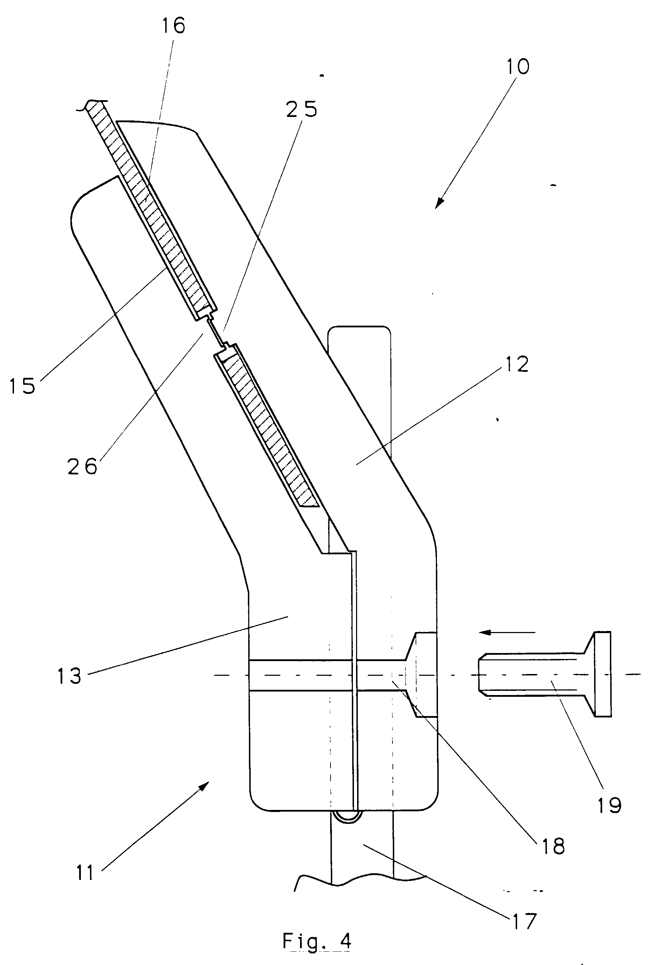

According to a further form of embodiment shown in figure 4, both parts 12, 13 of support element 11 are provided with a protrusion 25, 26 in correspondence with the inside area of groove 15 where mudguard 16 to be fixed finds its location.

Even in this case mudguard 16 is provided with a suitable hole so that said protrusions 25, 26 can interact with it, the blocking of the entire device being guaranteed by the subsequent clamping of one screw 19 or of a couple of screws, or of another mechanical coupling means, inserted into one or more further holes 18 of the type described previously.

According to a further variant of the present invention, support element 11 is moulded into just one piece, so that parts 12, 13 of said support element 11 provided with protrusions 25, 26 cannot open and already result to be in a position in which they match with each other, to form groove 15 of which above.

According to that form of embodiment, it is possible to fix support stick 17 to blocking device 11 providing this with a hole which is slightly conically shaped so that stick 17 can be keyed inside it avoiding to have to resort to any screw or any other mechanical means 19 cited above.

Furthermore, in such a case instead of comprising a hole as shown in the previous forms of embodiment, mudguard 16 is advantageously provided with cavities obtained within the thickness of said mudguard and exactly positioned in correspondence with said protrusions 25, 26.

This means therefore that on the basis of such a form of embodiment, mudguard 16 is snappingly inserted into support element 11 and it is kept in the right position thanks to the interaction between protrusions and cavity.

The present invention was previously described with reference to some of its particular forms of embodiment.

It is nevertheless evident that the invention is not limited to these forms of embodiment, but that it comprises all the modifications and variants that may be considered, without in so doing stepping out of the scope of the invention as it is claimed.

For example it is possible to set up the blocking device according to the present invention so that the support element of which above is provided with two or more protrusions which are integral with one first portion of said element, said protrusions interacting with two or more complementary cavities that belong to a second portion of said support element.

By the same token, the scope of the blocking device according to the present invention comprises the form of embodiment according to which the support element of which above consists of just one portion, said portion being provided with two or more protrusions, shaped as hooks for example, which are suitable for interacting with said mudguard and for keeping it in the right operational position.

## Claims

1. Blocking device (10) of a bicycle mudguard (16) comprising a support element (11) forming a groove (15) suitable for receiving said mudguard (16), at least one hole positioned longitudinally with respect to said blocking device (10) and suitable for hosting at least one support stick (17) of said mudguard (16), and at least one protrusion (20, 22, 23, 25, 26) cooperating with the support element (11) and with said mudguard, characterised in that said at least one protrusion (20, 22, 23, 25, 26) is made of a synthetic material and in that said at least one protrusion points towards the inside of the groove (15) and is suitable for going through the thickness of the mudguard (16) positioned along said groove (15), said mudguard (16) being provided with a suitable hole that makes it possible for said at least one protrusion (20, 22, 23, 25, 26) to go through it.

2. Blocking device (10) according to claim 1, characterised in that the support element (11) is formed by at least two portions (12, 13), and in that said at least one protrusion (20, 22, 23, 25, 26) is integral with one first portion (12) of the support element, and in that a second portion (13) of the support element is provided with a cavity (21, 24) having a shape and size that are complementary with said at least one protrusion (20, 22, 23, 25).

3. Blocking device (10) according to claim 2, characterised in that the end of the protrusion (20) is provided with a terminal portion having a larger section (22) which is suitable for cooperating with a corresponding cavity (21), said cavity (21) having shape and size that are complementary with those of said terminal portion (22).

4. Blocking device (10) according to claim 2, characterised in that said at least one protrusion (20) is provided with an end which is shaped as a hook (23) and in that the second portion (13) of said support element (11) has a suitable hole (24) made for the passage and subsequent anchoring of said protrusion (20).

5. Blocking device (10) according to claim 1, characterised in that the support element (11) is a one piece (12) and in that inside said groove (15) there is found to be provided a protrusion (20) whose end shaped as a hook (23) is bound to be fixed inside said suitable hole made in said mudguard (16).

6. Blocking device (10) according to claim 1, characterised in that portions (12, 13) of support element (11) are made from just one piece.

7. Blocking device (10) according to claim 6, characterised in that portions (12, 13) of support element (11) are provided with protrusions (25, 26) pointing towards the inside of said groove (15) and suitable for being inserted into said suitable hole that is present in said mudguard (16).

8. Blocking device (10) according to claim 6, characterised in that said at least one hole positioned longitudinally to said blocking device (10) has a shape that is slightly conical so that it can precisely host said at least one support stick (17).

9. Blocking device (10) according to any of the preceding claims, characterised in that said at least one support stick (17) is provided with transversal notches positioned along a longitudinal direction of said stick (17), said notches being conceived to interact with means that is part of the blocking device (10) so as to make it possible to fix the stick at a predetermined length.

10. Blocking device (10) according to claim 1, characterised in that it is provided with at least one further hole (18) transversally positioned with respect to said support element (11) and proximal to said at least one support stick (17) , said further hole (18) being conceived for hosting at least one mechanical means (19) for fixing said device (10).

11. Blocking device (10) according to claim 2, characterised in that said protrusion consists of a peg made of a synthetic material which is capable of being inserted with pressure into a first hole provided in said first portion, into said hole provided in the mudguard, as well as into a second hole provided in said second portion.
